# EUROPEAN PATENT SPECIFICATION

(11) **EP 3 310 575 B1**
(45) Date of publication and mention of the grant of the patent: **17.12.2025**
(21) Application number: 16741132.1
(22) Date of filing: 25.05.2016
(51) Int. Cl.: B32B 21/02, B32B 21/08, B32B 27/08, B32B 27/30, B32B 27/32, B32B 27/36

(54) **THERMOPLASTIC LAMINATE SHEET**
THERMOPLASTISCHE LAMINATFOLIE
FEUILLE DE STRATIFIÉ THERMOPLASTIQUE

(30) Priority: 26.05.2015 IT UB20151178; 18.05.2016 IT UA20163567
(43) Date of publication of application: 25.04.2018
(73) Proprietor: Incussus, LLC, Middletown, DE 19709 (US)
(72) Inventor: CERIZZA, Giuseppe, 22079 Villa Guardia (CO) (IT); CONDE BALZA, Hugo Enrique, Weston, Florida 33326 (US)
(74) Representative: Ottazzo, Marco Francesco Agostino
(86) International application number: PCT/IB2016/053050
(87) International publication number: WO 2016/189467

(56) References cited:
- WO-A1-01/00406
- WO-A1-2010/034877
- WO-A1-2015/094665
- DE-A1- 3 004 321
- US-A- 3 208 898
- US-A- 3 976 528
- US-A- 5 019 203
- US-A1- 2012 028 049
- US-B1- 6 171 681

## Description

The present invention relates to a thermoplastic laminate sheet consisting of a multiplicity of thermoplastic layers.

Surfaces of pieces of furniture or structures made of wood or particleboard materials, such as, for example, the so-called MDF (Medium Density Fiberboard), are made more valuable using decorative laminated products, the so-called HPLs (High Pressure Laminates), or thermoplastic films.

The decorative laminated products are mainly used as materials to be applied by pressing to the surfaces of the pieces of furniture or of structures made of wood or particleboard. A HPL sheet comprises a kraft paper base impregnated with phenolic resins that have thermosetting function, a decorative layer of printed or solid color paper, and an overlay of thermosetting melamine resin having finishing function. Such HPL decorative laminate products are applied to the sheet-shaped surfaces, e.g., following an American standard ANSI/NEMA LD 3-2005 or a European standard EN438. The thickness of the HPL sheet is from 0.7 mm to 2 mm. However, the HPL sheets have the technical disadvantage of being subject to deformations because of the various layers glued onto one another, and have edges which bend upwards in the corners of the sheet, making the application to such surfaces difficult. Furthermore, the HPL sheets have the disadvantage of cracking on the edges of the pieces of furniture because of the stress forces to which the various layers of the HPL sheet are subjected in a differentiated manner. The HPL sheets have the disadvantage of having edges that lift unless insufficient glue is used to withstand the differential stresses between the various layers of the HPL sheet. Furthermore, an additional technical disadvantage of the HPL sheets is that, once they are glued to said surface, there is an apparent lack of color uniformity on the entire thickness; indeed, the passage between two HPL sheets is apparent because a color difference between a lower part of the kraft paper and the overlay is clearly visible on the edges of the HPL sheets. The use of HPL sheets is disadvantageous because the sheet must be applied by a layer of glue, thus consuming a lot of glue to achieve an optimal application to the surface. American standard ANSI/NEMA LD 3-2005 shows the mechanical properties of HPL decorative laminate products concerning resistance to stress and to mechanical shocks, flatness properties of the sheets, deformation features of the sheet, and features of cracking of the sheet on the edges once it is glued to surfaces. The HPL sheets have a resistance index of 55 inches for ball impact resistance and of 22 inches for dart impact resistance as shown in Table 2-1 of American standard ANSI/NEMA LD 3-2005. The HPL sheet is disadvantageously subject to humidity-related problems, indeed the HPL sheet loses it flatness in the presence of humid environments because the HPL sheet comprises paper layers which absorb the humidity and deform the HPL sheet, creating problems during the gluing of the HPL sheet to the surface.

The thermoplastic films are instead glued over surfaces of furniture or structures made of wood or particleboard materials. The thermoplastic films are very thin, i.e., from 0.25 to 0.7 mm at most. The thickness of the thermoplastic films which are applied in a membrane press to the surfaces of furniture doors made of MDF is often less than 0.5 mm for technical reasons related to membrane pressing. Exceptionally, in some cases, the thickness of the thermoplastic films may reach up to 0.7 mm. Instead, the thickness of thermoplastic films which are applied flat to panel surfaces made of MDF or particleboard is from 0.12 to 0.3 mm. Disadvantageously, the thickness of the thermoplastic films from 0.12 to 0.3 mm must be applied to such surfaces by vacuum presses or membrane presses. Disadvantageously, the thermoplastic films do not maintain their flatness because they are too thin and they are less than 0.7 mm thick to the extent that they are wound into coils. Also disadvantageously, lamination machines may apply such thermoplastic films of thickness from 0.12 to 0.3 mm only if wound on coils because of the low rigidity of said thermoplastic films, which do not allow them to be formed in the shape of a sheet. A further disadvantage of the thermoplastic films according to the prior art is due to the fact that they have neither the mechanical properties nor the technical properties of resistance to stress and to shocks of the HPL sheets. Thermoplastic films of the type described above are, for example, those described in WO-2010/034877-A1 and US-6171681-B1. US-3976528 describes thin films used as overlay on kraft paper, and United States Patent Publication No. 2012/0028049-A1 to Prejean et al. describes thin films used as interlayer between two different layers.

In order to acquire some mechanical properties of the HPL sheets, i.e., of the laminates, the background art describe sheets comprising thermoplastic film multilayers disadvantageously assembled with layers of different materials, e.g., described in US-6333094-B1, US-2003/0036323-A1, US-6159583 and US-7064092-B2. Said layers of different materials allow to increase the flatness of the sheet comprising thermoplastic film multilayers but disadvantageously increase the use of glue between one layer and the other, disadvantageously create problems of deformation and of gluing between the various layers and the surface and, furthermore, cannot achieve the mechanical shock resistance of the HPL sheets.

There are no thermoplastic films thicker than 0.7 mm in the background art to be applied to structures made of wood or particleboard material, such as furniture, because there are technical problems in manufacturing them, which problems have remained unsolved until now. Said problems are caused by the delamination of the film during the manufacturing process, which couples the layers of thermoplastic film on top of one another. These technical problems cause deformations of thermoplastic film layers, delamination, formation of folds, exaggerated stretching of the thermoplastic film, which creates thickness differences such to cause loss of uniformity of the thermoplastic material film thickness and over-density in the layers, which causes loss of uniformity of thickness of the thermoplastic film layer, thus disadvantageously limiting mechanical resistance and flatness.

Thermoplastic layers joined to layers of different material that may be thicker than 0.7 mm are known in the background art, such as the 1 or 2 mm thick layers described in WO-2001/00406-A1, which are however used for floors and are applied horizontally and not to furniture or structures made of wood or particleboard materials with substantially vertical walls. Said thick layers cannot be used for vertical walls, otherwise the layers of different materials glued to one another would deform by slipping, creating differences of thickness and loss of uniformity, thus disadvantageously limiting mechanical resistance and flatness. Disadvantageously, glue is extensively used.

The other thermoplastic layers for covering floors are approximately 20 mil thick, i.e., approximately 0.5 mm, and are described in WO-2015/094665.

US-2004/0188006-A1 describes a method for manufacturing thermoplastic films which comprises a simultaneous coupling between two thermoplastic layers and at most three thermoplastic layers by comb rollers and by compression, said two thermoplastic materials are glued to each other by glues which are sprayed onto a contact surface between the two thermoplastic layers before they are coupled. A multilayer consisting of two thermoplastic layers glued to each other and divided into sheets by cutting means, e.g., by guillotine cutting means, is obtained at the end of the coupling process. Disadvantageously, glue is extensively used to glue the two thermoplastic layers to each other. Furthermore, the multilayer formed by two or three thermoplastic layers is not shock-resistant and does not have technical features comparable to those obtained with HPL sheets. The sheets obtained with the method described in US-2004/0188006-A1 cannot be as thick as the HPL sheets, because when three thermoplastic layers are coupled, they must pass simultaneously under a single roller and must be glued along all the gluing surfaces to one another. Performing a single coupling of more than two thermoplastic layers at the same time allows to avoid exaggerated stretching of the thermoplastic film, avoiding the creation of thickness differences such to cause loss of uniformity of the thermoplastic material film thickness and over-density in the layers, which cause loss of uniformity of thickness of the thermoplastic film layer, thus however disadvantageously limiting mechanical resistance and flatness. However, high thickness cannot be obtained with said single simultaneous coupling, unless accepting deformations of the thermoplastic film layers, delamination, because the single layers should be heated to excessively high temperatures to the extent of being deformed, or, alternatively, as described in US-2004/0188006-A1, should be glued to one another with the extremely high and excessive use of glue. The use of glue between one layer and the other of the thermoplastic layers does not allow to solve the problems of lifting the sheets at the edges, disadvantageously creating problems of gluing on the surfaces and problems related to sheet deformations and cracking on the edges of the surfaces once the sheet is further glued to the surfaces. The use of glues for gluing the multiple thermoplastic layers is disadvantageous because shock resistance comparable to that of HPL sheets cannot be obtained.

Methods of manufacturing thermoplastic laminates are described, for example, in US-5019203 and DE-3004321-A1.

Embossing methods are described for example in US-3208898.

It is the object of the present invention to provide a piece of furniture or a structure made of word or particleboard which mounts a thermoplastic laminate to at least one surface, which thermoplastic laminate has the mechanical properties of resistance to stress and to shocks either comparable to or greater than those of the HPL decorative laminated product sheets, has flatness properties comparable to those of HPL sheets, is applied to the surfaces of pieces of furniture or of structures made of wood or particleboard materials with use of less glue, is not subject to deformation and does not have edges which bend upwards in the corners, is easy to be applied to said surface, does not crack on the edges of said surfaces, does not have humidity-related problems, nor problems of application to said surfaces in humid environments, and has color uniformity of any entire surface.

In accordance with the invention, such an object is achieved by a furniture made of wood or of particleboard materials according to claim 1.

These and other features of the present invention will become further apparent from the following detailed description of practical embodiments thereof shown by way of non-limitative example in the accompanying drawings, in which:
Figure 1 shows a top plan view of a sheet of thermoplastic laminate according to a first practical example,
Figure 2 shows an enlargement A of a section taken along line II-II in figure 1,
Figure 3 shows the enlargement A of the section taken along line II-II in Figure 1 of the sheet of thermoplastic laminated according to a second example of practical embodiment,
Figure 4 shows the enlargement A of the section taken along line II-II in Figure 1 of the sheet of thermoplastic laminated according to a third example of practical embodiment,
Figure 5 shows a machine layout for coupling thermoplastic layers to one other,
Figure 6 shows an enlargement B in Figure 5.

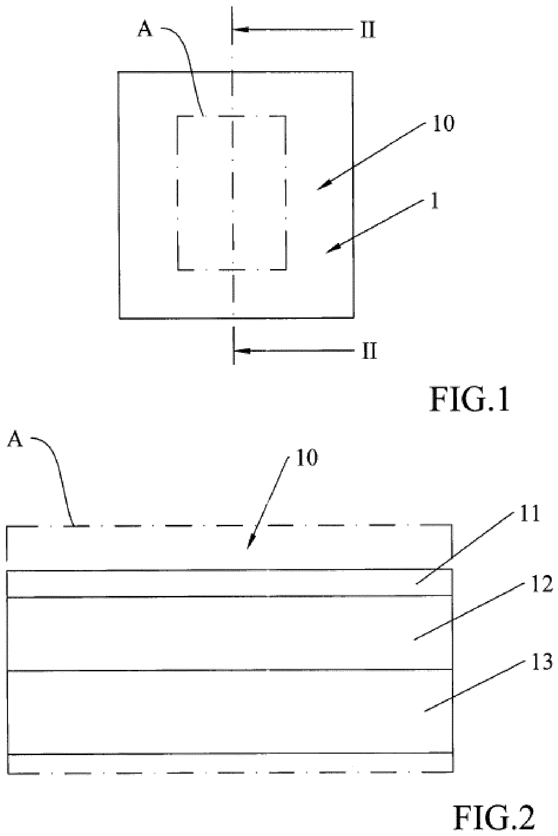

With reference to the figures listed above, and in particular to Figures 1-4, a thermoplastic laminate 1 can be observed, consisting only of a multiplicity of thermoplastic layers 11 to 18 which comprises at least one superficial thermoplastic layer 11 and at least two basic thermoplastic layers 12, 13, 14, 15, 16, 17, 18. Said multiple thermoplastic layers 11 to 18 are coupled to one another without glue by means of a superficial heating of coupling surfaces and by pressing one onto another.

The superficial thermoplastic layer 11 is a thin film of any one of materials of a list comprising PVC (an acronym for Polyvinyl chloride), PET (an acronym for Polyethylene terephthalate), PETG (an acronym for Polyethylene terephthalate glycol), PP (an acronym for Polypropylene), and PE (an acronym for Polyethylene). Said superficial thermoplastic layer 11 may be rigid or semi-rigid. The superficial thermoplastic layer 11 may be a crystal or a superficial layer treated with a finishing paint. If the superficial thermoplastic layer 11 is a crystal, then the plasticization of said crystal superficial thermoplastic layer 11 is from 10 to 30 phr (parts per hundred of resin). The crystal superficial thermoplastic layer 11 may be filled with mineral filers included in a list comprising TiO₂, calcium carbonate, silica, and talc. The crystal superficial thermoplastic layer 11 is transparent to protect the printing underneath. Instead, the superficial thermoplastic layer 11 treated with paint finishing may also be applied to TU products.

Each of said two basic thermoplastic layers 12 to 18 is a film made of any one of materials of a list comprising PVC, PET, PETG, PP, and PE. Each of said least two basic thermoplastic layers 12 to 18 is rigid and free of plasticizers. The basic thermoplastic layers 12 to 18 can be colored.

The single basic thermoplastic layers 11 to 18 are made using manufacturing technological of the prior art known as calendering and extruding.

Said thermoplastic laminate 1 consists of a sheet 10 having a thickness from 0.75 mm to 4 mm. The sheet 10 of thermoplastic laminate 1 is plane, flat and rigid so as to keep advantageous flat. It is rigid, meaning that the sheet 10 of thermoplastic laminate 1 is not wound in coils but is kept in the form of a flat sheet 10. Said sheet 10 of thermoplastic laminate 1 is applied by pressing or gluing to the surfaces of pieces of furniture or wood structures or particleboard materials.

The sheet 10 of thermoplastic laminate 1 may be of solid color or printed with different decorations, with different surface finishes, from smooth to deeply engraved, either registered or not. Superficial protection paints can also be applied to the sheet 10.

A method of manufacturing the sheet 10 of thermoplastic material 1 comprises single couplings, i.e., coupling between two single layers 11 to 18, which form combined thermoplastic multilayers, and combined couplings, i.e., couplings between combined thermoplastic multilayers, which were previously coupled according to single couplings without the use of glue between one layer and the other of the multiplicity of thermoplastic layers 11 to 18.

As shown in FIGS. 1 and 2, a first embodiment includes a sheet 10 of thermoplastic laminate 1 for surfaces of pieces of furniture or structures made of wood or particleboard materials consists of a superficial thermoplastic layer 11 and two basic thermoplastic layers 12 and 13. The superficial thermoplastic layer 11 is transparent and is 100 micrometers thick. Each of the two basic thermoplastic layers 12 and 13 is 350 micrometers thick. The sheet 10 is 800 micrometers thick, i.e., 0.8 mm.

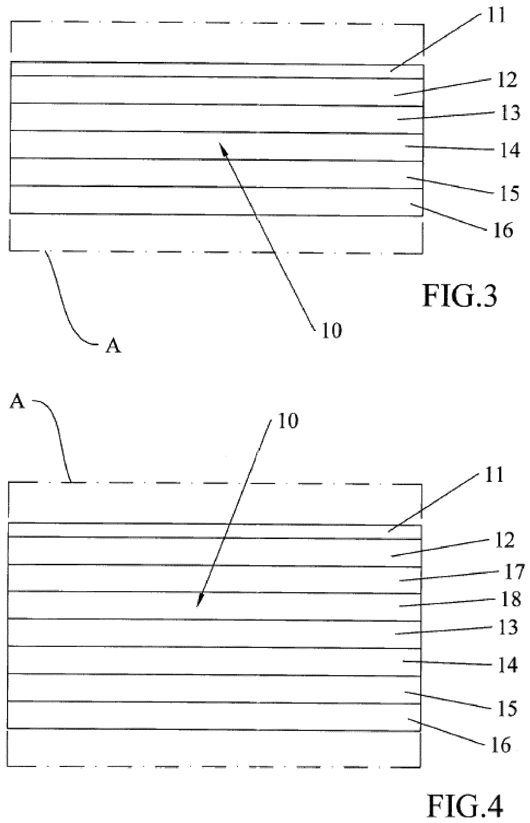

In a second embodiment, the sheet 10 of thermoplastic laminate 1 consists of a superficial thermoplastic layer 11 and five basic thermoplastic layers 12, 13, 14, 15, 16, as shown in Figure 3. The superficial thermoplastic layer 11 is transparent and is 100 micrometers thick. Each of the five basic thermoplastic layers 12 to 16 is 350 micrometers thick. The sheet 10 is 1850 micrometers thick, i.e. 1.85 mm.

In a third embodiment, the sheet 10 of thermoplastic laminate 1 consists of a superficial thermoplastic layer 11 and eight basic thermoplastic layers 12, 13, 14, 15, 16, 17, 18, as shown in FIG. 4. The superficial thermoplastic layer 11 is transparent and is 100 micrometers thick. Each of the eight basic thermoplastic layers 12 to 18 is 350 micrometers thick. The sheet 10 is 2550 micrometers thick, i.e., 2.55 mm.

The thickness of the thermoplastic laminate sheet 1 is from 0.8 mm to 2.55 mm. Starting from different thicknesses of the thermoplastic layers 11 to 18, a thickness from 0.75 mm to 4 mm may be provided for the sheet 10 of thermoplastic laminate 1.

A sheet 10 of thermoplastic laminate 1 advantageously consists only a multiplicity of thermoplastic layers 11 to 18, which comprises at least one superficial thermoplastic layer 11 and at least two basic thermoplastic layers 12 to 18, said multiple thermoplastic layers 11 to 18 are made of any one of materials of a list comprising PVC, PET, PETG, PP, PE. Said sheet 10 of thermoplastic laminate 1 consists only at least one superficial thermoplastic layer 11 and of said at least two basic thermoplastic layers 12 to 18. Said multiple thermoplastic layers 11 to 18 are coupled to one another without glue by means of a superficial heating of coupling surfaces and pressing onto one another, i.e., every first layer 21 of said multiplicity of thermoplastic layers 11 to 18 is coupled to a second layer 22 of said multiplicity of thermoplastic layers 11 to 18 without glue by superficial heating of the coupling surfaces of said first layer 21 with said second layer 22. The thickness of said thermoplastic laminate sheet 1 is greater than 0.7 mm, i.e., from 0.75 mm to 4 mm. Said sheet 10 of thermoplastic laminate 1 is plane, flat, and rigid.

Said at least one superficial thermoplastic layer 11 is advantageously a thin thermoplastic film and has a plasticization from 10 to 30 parts per hundred of resin, said at least two basic thermoplastic layers 12 to 18 are rigid and free of plasticizers.

Said at least one superficial thermoplastic layer 11 is 100 micrometers thick and each of said at least two basic thermoplastic layers 12 to 18 is 350 micrometers thick.

One outer surface of the sheet 10 of thermoplastic laminate 1 is advantageously embossed.

Advantageously, the mechanical shock resistance properties of the sheet 10 of thermoplastic laminate 1 are comparable to those of a sheet of HPL decorative laminated products. The resistance index of the sheet 10 of thermoplastic laminate 1 according to the present invention is 60 inches for ball impact resistance and 25 inches for dart impact resistance, values that are similar to those of the HPL sheet, which are 55 inches and of 22 inches, respectively, as shown in Table 2-1 of American standard ANSI/NEMA LD 3-2005. Further measurements indicate that the dart impact resistance of the sheet 10 of thermoplastic laminate 1 according to the present invention is 28 inches, which is considerably better than the HPL sheet. Advantageously, the sheet 10 of thermoplastic laminate 1 has mechanical properties of resistance to stress and to shocks comparable to and better than the HPL sheets. A sheet 10 of thermoplastic laminate 1 less than approximately 0.8 mm thick +/- 0.05 mm does not achieve said technical resistance properties comparable to those of HPL sheets.

Advantageously, the sheet 10 of thermoplastic laminate 1 has flatness properties comparable and even much better than those of a sheet of HPL decorative laminate products. With reference to table 2.4 of the American standard ANSI/NEMA LD 3-2005, a flatness test is performed, which test measures and records the thickness of the sheet in all corners of the sheet and at mid-point of each side of the sheet, according to the technical procedures explained in paragraph 3.1.5 of the American standard ANSI/NEMA LS 3-2005. The result of said flatness test is +/- 120 mm for the single-face HPL sheet less than 2 mm thick, while for the single-face HPL sheet thicker than 2 mm the result of the flatness test is +/- 50 mm. With regards to the sheet 10 of thermoplastic laminate 1 according to the present invention which is 0.8 mm +/- 0.05 mm, the result of the flatness test is +/- 3 mm is considerably and advantageously better than the flatness of the HPL sheets. Said flatness measurement of said sheet 10 of thermoplastic laminate 1 is from - 3 mm to + 3 mm.

Better flatness properties of the sheet 10 of thermoplastic laminate 1 allows to apply sheets 10 of thermoplastic laminate 1 to surfaces of pieces of furniture or structures made of wood or particleboard materials with use of less glue. Advantageously, the extreme and surprising flatness of the sheet 10 of thermoplastic laminate can reduce the deformation and avoid edges which bend upwards in the corners, thus facilitating the application of the sheet 10 to said surfaces.

Advantageously, the sheet 10 of thermoplastic laminate 1 allows the sheet 10 of thermoplastic laminate 1, once applied to such surfaces, not to crack on the edges, because the sheet 10 once glued is subject to less stress. Fewer stresses are due to the fact that the layers of thermoplastic material which form the sheet 10 are uniform and homogeneous, and thus greatly reduce the stresses that crack the HPL sheets, the constructional layers of which are instead different and glued together. HPL sheets have a dimensional stability of 0.70% in the direction of the sheet-manufacturing machine and a dimensional stability of 1.20% in the crosswise direction. The sheets 10 of thermoplastic laminate 1 instead maintain a much more homogeneous and much more uniform thickness, with a dimensional stability lower than 0.2% both in the direction of the machine and in the crosswise direction.

Consisting only of thermoplastic layers made of materials from the list comprising PVC, PET, PETG, PP, and PE, the sheet 10 of thermoplastic laminate 1 allows to avoid humidity-related problems or problems of application to said surfaces in humid environments because said materials from the list do not suffer from humidity-related problems.

Advantageously, the sheet 10 of thermoplastic laminate 1 allows it to maintain color uniformity along the entire thickness of the sheet 10. The surface resistance of an HPL sheet is attested at 400 cycles a minute, while the surface resistance of a sheet 10 of thermoplastic laminate 1 is attested at over 1500 cycles per minute for printed sheets and at over 4000 cycles per minute for sheets of uniform color.

The sheet 10 of thermoplastic laminate 1 according to the present invention provides all the advantages of the technical properties of HPL sheets, even improving those advantageous technical properties and further solving all the disadvantages of the HPL sheets.

Advantageously, the sheet 10 of thermoplastic laminate 1 according to the present invention can be easily post-formed and can further improve appearance because the sheet 10 of thermoplastic laminate 1 has uniform color on the entire outer surface. Instead, color uniformity on the outer surface of HPL sheets may be obtained only with longer, more complicated and uneconomical manufacturing processes. Known post-forming techniques of HPL sheets include, as first step, a shaping of the substrate according to a curved profile of a support, which is a structure made of wood or particleboard materials. The substrate is then glued by adhering it completely to the support in a flat zone and in a curved zone. The post-forming at ambient room temperature for the HPL sheets is 13 mm. Instead, the sheet 10 of thermoplastic laminate 1 has a post-forming radius at ambient temperature of 8 mm, which is considerably better than that of the HPL sheets.

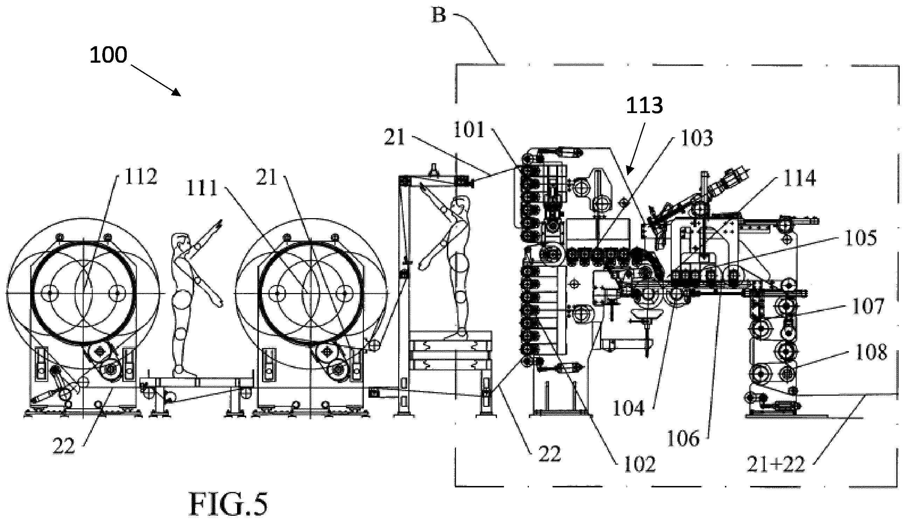

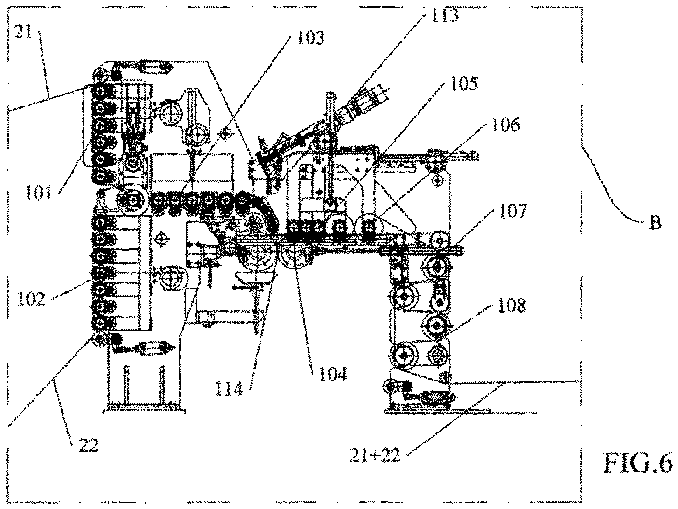

The method of manufacturing the sheet 10 of thermoplastic laminate 1 according to the three practical embodiments is implemented by means of roller machines 100, 101-108, 111, 112 as shown in FIGS. 5 and 6. A coupling cycle on the machine 100 is needed to couple a first layer 21 and a second layer 22.

The machine 100 comprises a first coil 111 which winds a first layer 21 of any one of the thermoplastic layers 11-18 or of any one of the combined thermoplastic multilayers and adjusts a sliding speed of the first layer 21.

The adjustment of the sliding speed advantageously permits keeping the first layer 21 taut, thus preventing the formation of deformities, folds, or stretching that deform the first layer 21.

The machine 100 also comprises a second coil 112 which winds a second layer 22 of any one of the thermoplastic layers 11 to 18 or of any one of the combined thermoplastic multilayers and controls a sliding speed of the second layer 22.

The adjustment of the sliding speed allows to advantageously keep the second layer 22 taut, thus preventing the formation of deformities, folds, or stretching that deform the second layer 22.

The machine 100 comprises a first multiplicity of comb rollers 101 and a second multiplicity of comb rollers 102.

Said first multiplicity of comb rollers 101 rotates at a first speed V1 and allows to contribute to adjusting the sliding speed of the first layer 21 and keeping the first layer 21 taut and pre-heating it by means of a fluid, e.g., a diathermic oil, the first inlet temperature Ti-1 of which is measured when delivered to users.

Said machine 100 comprises a third multiplicity of coupling rollers 103. Said coupling rollers 103 are downstream of the first multiplicity of comb rollers 101 and downstream of second multiplicity of comb rollers 102. Said coupling rollers 103 press together the first layer 21 and the second layer 22 to form a combined multilayer 21+22. The fluid delivered to said multiplicity of coupling rollers 103 has a third input temperature Ti-3. Said third multiplicity of rollers 103 has a third rotation speed V3. The third rotation speed V3 allows to couple the first layer 21 and the second layer 22 without stretching, folding, or delamination and without damaging the layers 21, 22. The third rotation speed V3 of the third multiplicity of rollers 103 contributes to keeping the combined multilayer 21+22 correctly taut.

Said coupling rollers 103 mount a multiplicity of infrared heating lamps 113 to the machine 100 which heat the combined multilayer 21+22 while it passes on the coupling rollers 103. Said infrared lamps 113 promote the coupling of the first layer 21 to the second layer 22.

Said machine 100 comprises a fourth roller 104, which may mount a smooth surface or a surface with a pattern to have the function of embossing roller 104 for the outer surface of the sheet 10 of thermoplastic laminate 1 when needed during the method of manufacturing the sheet 10 of thermoplastic laminate 1. Said fourth roller 104 is mounted downstream of the multiplicity of coupling rollers 103. The fluid delivered to said fourth roller 104 has a fourth input temperature Ti-4. A temperature-measuring device 114 is arranged at the inlet of the fourth roller 104. The temperature-measuring device 114 is an infrared ray sensor that measures a temperature T4 of the combined multilayer 21+22 after it was heated by the infrared lamps 113. The fourth roller 104 has a rotation speed V4 which contributes together with the other speeds V1, V2, and V3 to keeping the combined multilayer 21+22 taut, thus preventing the formation of deformities and folds.

Said machine 100 comprises a fifth multiplicity of rollers 105 which rotate at a fifth speed V5. The delivery fluid input to the fifth multiplicity of rollers 105 has a fifth input temperature Ti-5.

Said machine 100 comprises a sixth multiplicity of rollers 106 which rotate at a sixth speed V6. The delivery fluid input to the sixth multiplicity of rollers 106 has a sixth input temperature Ti-6.

Said machine 100 comprises a seventh multiplicity of rollers 107 which rotate at a seventh speed V7. The delivery fluid input to the seventh multiplicity of rollers 107 has a seventh input temperature Ti-7.

Said machine 100 comprises an eighth multiplicity of rollers 108 which rotate at an eighth speed V8. The delivery fluid input to the eighth multiplicity of rollers 108 has an eighth input temperature Ti-8.

The fifth, sixth, seventh, and eighth pluralities of rollers 105 to 108 contribute to keeping the combined multilayer 21+22 taut, avoiding deformations and contributing to a gradual cooling of the combined multilayer 21+22, which would otherwise be subject to differences of temperature which could compromise flatness, homogeneousness, and uniformity.

The speeds V1 to V8 allow to keep the combined multilayer 21+22 homogeneous and uniform without folds, without deformities, and with high flatness properties.

A machine cycle 100 couples the first layer 21 to the second layer 22 forming a combined multilayer 21+22. At the end of the machine cycle, either the combined multilayer 21+22 can be restarted for a further combined coupling with another combined multilayer previously formed by a previous cycle of the machine 100 or the cycle can be ended.

At the end of the cycle, cutting means are provided in line with the machine 100, such as, for example, a guillotine or rotating cutting means (not shown in the figures) downstream of the machine 100 after the eighth multiplicity of rollers 108. Said cutting means cuts the sheets 10 of thermoplastic laminate 1 to a desired size. The sheets 10 of thermoplastic laminate 1 are arranged on a flat support to then be stored for use.

The method of manufacturing said sheet 10 of thermoplastic laminate 1 according to the first embodiment of the present invention comprises a multiplicity of couplings between said thermoplastic layers 11 to 13.

The manufacturing method comprises a first single coupling between the superficial thermoplastic layer 11 and a first basic thermoplastic layer 12, said first single coupling forms a first combined thermoplastic multilayer 11+12, which is 450 micrometers thick.

The superficial thermoplastic layer 11 is the first layer 21 and the second basic thermoplastic layer 12 is the second layer 22, which is coupled according to the machine cycle 100.

The first input temperature Ti-1 of the fluid which acts on the superficial thermoplastic layer 11 in the first multiplicity of comb rollers 101 is from 55 to 75 degrees. The first speed V1 of the first multiplicity of the comb rollers 101 is from 4 to 14 m/min.

The second input temperature Ti-2 of the fluid which acts on the basic thermoplastic layer 12 in the second multiplicity of comb rollers 102 is from 100 to 130 degrees. The second speed V2 of the second multiplicity of the comb rollers 102 is from 4.1 to 14.1 m/min.

The third input temperature Ti-3 of the fluid to the third multiplicity of coupling rollers 103 is from 130 to 170 degrees, while the third speed V3 of the rollers of the multiplicity of coupling rollers 103 is from 4.1 to 14.1 m/min.

An embossing operation may be included at the end of the first single coupling. Advantageously, the embossing operation is performed only after the first single coupling between the superficial thermoplastic layer 11 and the first basic thermoplastic layer 12 to preserve an outer surface of the first combined thermoplastic multilayer 11+12. Said outer surface is exposed to the outside of the sheet 10 of thermoplastic laminate 1 and corresponds to an outer surface of the superficial thermoplastic layer 11. The embossing operation allows to give a desired pattern to the outer surface of the first combined thermoplastic multilayer 11+12.

The embossing operation provides for the fourth roller 104 of the machine 100 mounting a surface comprising the embossing pattern. The fourth input temperature Ti-4 of the delivery fluid on the fourth roller 104 is from 70 to 110 degrees, while the fourth speed V4 of the rollers of fourth roller 104 is from 4.2 to 14.2 m/min.

The temperature T4 of the first combined thermoplastic multilayer 11+12 at the inlet of the fourth roller 104 is from 145 to 195 degrees.

The fifth input temperature Ti-5 of the delivery fluid to the fifth multiplicity of coupling rollers 105 is from 50 to 70 degrees, while the fifth speed V5 of the fifth multiplicity of rollers 105 is from 4.3 to 14.3 m/min.

The sixth input temperature Ti-6 of the delivery fluid to the sixth multiplicity of rollers 106 is from 40 to 65 degrees, while the sixth speed V6 of the sixth multiplicity of rollers 106 is from 4.6 to 14.6 m/min.

The seventh input temperature Ti-7 of the delivery fluid to the seventh multiplicity of rollers 107 is from 35 to 55 degrees, while the seventh speed V7 of the seventh multiplicity of rollers 107 is from 4.6 to 14.6 m/min.

The eighth input temperature Ti-8 of the delivery fluid to the eighth multiplicity of rollers 108 is from 25 to 45 degrees, while the eighth speed V8 of the eighth multiplicity of rollers 108 is from 4.6 to 14.6 m/min.

The method comprises a first combined coupling between the first combined thermoplastic multilayer 11+12 and a second basic thermoplastic layer 13, this first combined coupling forms the sheet 10 of thermoplastic laminate 1 according to the first embodiment. The sheet 10 is approximately 800 micrometers thick, i.e., 0.8 mm +/- 0.05 mm.

The last combined coupling includes a further machine cycle, in which the first combined thermoplastic multilayer 11+12 is the first layer 21 and the second basic thermoplastic layer 13 is the second layer 22, which is coupled according to the machine cycle 100.

The first input temperature Ti-1 of the fluid that acts on the first combined thermoplastic multilayer 11+12 in the first multiplicity of comb rollers 101 is from 115 to 145 degrees. The first speed V1 of the first multiplicity of the comb rollers 101 is from 2.7 to 12.7 m/min.

The second input temperature Ti-2 of the fluid which acts on the second basic thermoplastic layer 13 in the second multiplicity of comb rollers 102 is from 100 to 130 degrees. The second speed V2 of the second multiplicity of the comb rollers 102 is from 2.7 to 12.7 m/min.

The third input temperature Ti-3 of the fluid to the third multiplicity of coupling rollers 103 is from 120 to 180 degrees, while the third speed V3 of the rollers of the multiplicity of coupling rollers 103 is from 3 to 13 m/min.

The fourth input temperature Ti-4 of the delivery fluid on the fourth roller 104 is from 74 to 114 degrees, while the fourth speed V4 of the rollers of fourth roller 104 is from 2.6 to 12.6 m/min.

The temperature T4 of the sheet 10 at the inlet of the fourth roller 104 is from 150 to 200 degrees.

The fifth input temperature Ti-5 of the delivery fluid to the fifth multiplicity of coupling rollers 105 is from 60 to 80 degrees, while the fifth speed V5 of the fifth multiplicity of rollers 105 is from 2.7 to 12.7 m/min.

The sixth input temperature Ti-6 of the delivery fluid to the sixth multiplicity of rollers 106 is from 50 to 70 degrees, while the sixth speed V6 of the sixth multiplicity of rollers 106 is from 2.8 to 12.8 m/min.

The seventh input temperature Ti-7 of the delivery fluid to the seventh multiplicity of rollers 107 is from 40 to 60 degrees, while the seventh speed V7 of the seventh multiplicity of rollers 107 is from 2.8 to 12.8 m/min.

The eighth input temperature Ti-8 of the delivery fluid to the eighth multiplicity of rollers 108 is from 30 to 50 degrees, while the eighth speed V8 of the eighth multiplicity of rollers 108 is from 2.8 to 7.8 m/min.

At the end of the machine cycle 100, the sheet 10 of thermoplastic laminate 1 is sent to cutting means in line with the machine 100 to cut the sheet 10 to desired dimensions.

The method of manufacturing the sheet 10 of thermoplastic laminate 1 according to the second embodiment of the present invention includes a multiplicity of couplings between said thermoplastic layers 11 to 16.

The manufacturing method comprises the first single coupling between the superficial thermoplastic layer 11 and a first basic thermoplastic layer 12, said first single coupling forms the first combined thermoplastic multilayer 11+12, which is 450 micrometers thick. The first single coupling passes the superficial thermoplastic layer 11 and the first basic thermoplastic layer 12 through the machine cycle 100. The temperatures Ti-1 to Ti-8 and the speeds V1 to V8 are those of the first single coupling of the first embodiment.

The method comprises a second single coupling between the second basic thermoplastic layer 13 and a third basic thermoplastic layer 14, said second single coupling forms a first combined thermoplastic multilayer 13+14 which is 700 micrometers thick.

The first input temperature Ti-1 of the fluid which acts on the second basic thermoplastic layer 13 in the first multiplicity of comb rollers 101 is from 100 to 120 degrees. The first speed V1 of the first multiplicity of the comb rollers 101 is from 3.5 to 12.5 m/min.

The second input temperature Ti-2 of the fluid which acts on the third basic thermoplastic layer 14 in the second multiplicity of comb rollers 102 is from 100 to 120 degrees. The second speed V2 of the second multiplicity of the comb rollers 102 is from 3.5 to 12.5 m/min.

The third input temperature Ti-3 of the fluid to the third multiplicity of coupling rollers 103 is from 150 to 170 degrees, while the third speed V3 of the rollers of the multiplicity of coupling rollers 103 is from 3.6 to 12.6 m/min.

The fourth input temperature Ti-4 of the delivery fluid on the fourth roller 104 is from 100 to 120 degrees, while the fourth speed V4 of the rollers of fourth roller 104 is from 3.8 to 12.8 m/min.

The temperature T4 of the combined multilayer 13+14 at the inlet of the fourth roller 104 is from 160 to 200 degrees.

The fifth input temperature Ti-5 of the delivery fluid to the fifth multiplicity of coupling rollers 105 is from 60 to 80 degrees, while the fifth speed V5 of the fifth multiplicity of rollers 105 is from 4.2 to 14.2 m/min.

The sixth input temperature Ti-6 of the delivery fluid to the sixth multiplicity of rollers 106 is from 50 to 70 degrees, while the sixth speed V6 of the sixth multiplicity of rollers 106 is from 4.2 to 14.2 m/min.

The seventh input temperature Ti-7 of the delivery fluid to the seventh multiplicity of rollers 107 is from 40 to 60 degrees, while the seventh speed V7 of the seventh multiplicity of rollers 107 is from 4.2 to 14.2 m/min.

The eighth input temperature Ti-8 of the delivery fluid to the eighth multiplicity of rollers 108 is from 30 to 50 degrees, while the eighth speed V8 of the eighth multiplicity of rollers 108 is from 4.2 to 14.2 m/min.

The method comprises a third single coupling between a fourth basic thermoplastic layer 15 and a fifth basic thermoplastic layer 16, said third single coupling forms a third combined thermoplastic multilayer 15+16 which is 700 micrometers thick. The temperatures Ti-1 to Ti-8 and the speeds V1 to V8 are those of the second single coupling of the second embodiment.

The method comprises a first combined coupling between the second combined thermoplastic multilayer 13+14 and a third combined thermoplastic multilayer 15+16, said first combined coupling forms a penultimate combined thermoplastic multilayer 13+14+15+16 which is 1400 micrometers thick.

The first combined coupling between the second combined thermoplastic multilayer 13+14 and the third combined thermoplastic multilayer 15+16 includes performing the machine cycle with the first input temperature Ti-1 of the fluid which acts on the second combined thermoplastic multilayer 13+14 of the first multiplicity of comb rollers 101 from 140 to 160 degrees. The first speed V1 of the first multiplicity of the comb rollers 101 is from 1.5 to 11.5 m/min.

The second input temperature Ti-2 of the fluid which acts on the third combine thermoplastic multilayer 15+16 in the second multiplicity of comb rollers 102 is from 130 to 150 degrees. The second speed V2 of the second multiplicity of the comb rollers 102 is from 1.5 to 11.5 m/min.

The third input temperature Ti-3 of the fluid to the third multiplicity of coupling rollers 103 is from 155 to 185 degrees, while the third speed V3 of the rollers of the multiplicity of coupling rollers 103 is from 1.6 to 11.6 m/min.

The fourth input temperature Ti-4 of the delivery fluid on the fourth roller 104 is from 110 to 130 degrees, while the fourth speed V4 of the rollers of fourth roller 104 is from 1.8 to 11.8 m/min.

The temperature T4 at the inlet of the fourth roller 104 is from 170 to 220 degrees.

The fifth input temperature Ti-5 of the delivery fluid to the fifth multiplicity of coupling rollers 105 is from 60 to 80 degrees, while the fifth speed V5 of the fifth multiplicity of rollers 105 is from 2.1 to 12.1 m/min.

The sixth input temperature Ti-6 of the delivery fluid to the sixth multiplicity of rollers 106 is from 50 to 70 degrees, while the sixth speed V6 of the sixth multiplicity of rollers 106 is from 2.1 to 12.1 m/min.

The seventh input temperature Ti-7 of the delivery fluid to the seventh multiplicity of rollers 107 is from 40 to 60 degrees, while the seventh speed V7 of the seventh multiplicity of rollers 107 is from 2.1 to 12.1 m/min.

The eighth input temperature Ti-8 of the delivery fluid to the eighth multiplicity of rollers 108 is from 30 to 50 degrees, while the eighth speed V8 of the eighth multiplicity of rollers 108 is from 2.1 to 12.1 m/min.

The method includes the last combined coupling between the first thermoplastic multilayer 11+12 and the penultimate combined thermoplastic multilayer 13+14+15+16. Said last combined coupling forms the sheet 10 of thermoplastic laminate 1 according to the embodiment. The sheet 10 is 1850 micrometers thick, i.e., 1.85 mm.

An embossing operation may be provided at the end of the last combined coupling. Advantageously, the embossing operation is provided only after the last combined coupling to preserve the outer surface of the first combined thermoplastic multilayer 11+12. The embossing operation acts to provide the desired pattern of the sheet 10 of thermoplastic laminate 1.

The last combined coupling includes performing the machine cycle with the first input temperature Ti-1 of the fluid into the first multiple of comb rollers 101 from 110 to 130 degrees. The first speed V1 of the first multiplicity of the comb rollers 101 is from 0.3 to 10.3 m/min.

The second input temperature Ti-2 of the fluid in the second multiplicity of comb rollers 102 is from 140 to 160 degrees. The second speed V2 of the second multiplicity of the comb rollers 102 is from 0.3 to 10.3 m/min.

The third input temperature Ti-3 of the fluid to the third multiplicity of coupling rollers 103 is from 150 to 180 degrees, while the third speed V3 of the rollers of the multiplicity of coupling rollers 103 is from 1.5 to 10.5 m/min.

The fourth input temperature Ti-4 of the delivery fluid on the fourth roller 104 is from 100 to 120 degrees, while the fourth speed V4 of the rollers of fourth roller 104 is from 0.4 to 10.4 m/min.

The temperature T4 at the inlet of the fourth roller 104 is from 165 to 200 degrees.

The fifth input temperature Ti-5 of the delivery fluid to the fifth multiplicity of coupling rollers 105 is from 60 to 80 degrees, while the fifth speed V5 of the fifth multiplicity of rollers 105 is from 0.5 to 10.5 m/min.

The sixth input temperature Ti-6 of the delivery fluid to the sixth multiplicity of rollers 106 is from 50 to 70 degrees, while the sixth speed V6 of the sixth multiplicity of rollers 106 is from 0.5 to 10.5 m/min.

The seventh input temperature Ti-7 of the delivery fluid to the seventh multiplicity of rollers 107 is from 40 to 60 degrees, while the seventh speed V7 of the seventh multiplicity of rollers 107 is from 0.6 to 10.6 m/min.

The eighth input temperature Ti-8 of the delivery fluid to the eighth multiplicity of rollers 108 is from 30 to 50 degrees, while the eighth speed V8 of the eighth multiplicity of rollers 108 is from 0.6 to 10.6 m/min.

Said sheet 10 is then cut by the cutting means in line with the machine 100.

The method of manufacturing said sheet 10 of thermoplastic laminate 1 according to the third embodiment of the present invention includes a multiplicity of couplings between said thermoplastic layers 11 to 18.

The manufacturing method comprises the first single coupling between the superficial thermoplastic layer 11 and a first basic thermoplastic layer 12, said first single coupling forms the first combined thermoplastic multilayer 11+12, which is 450 micrometers thick. The first single coupling passes the superficial thermoplastic layer 11 and the first basic thermoplastic layer 12 through the machine cycle 100. The temperatures Ti-1 to Ti-8 and the speeds V1 to V8 are those of the first single coupling of the first embodiment.

The method comprises the second single coupling between the second basic thermoplastic layer 13 and a third basic thermoplastic layer 14, this second coupling forms a second combined thermoplastic multilayer 13+14 which is 700 micrometers thick.

The method comprises the third single coupling between the fourth basic thermoplastic layer 15 and a fifth basic thermoplastic layer 16, said third single coupling forms a third combined thermoplastic multilayer 15+16 that is 700 micrometers thick.

The method comprises a fourth single coupling between a sixth basic thermoplastic layer 17 and a seventh basic thermoplastic layer 18, said fourth single coupling forms a fourth combined thermoplastic multilayer 17+18 which is 700 micrometers thick.

The method comprises the first combined coupling between the second combined thermoplastic multilayer 13+14 and a third combined thermoplastic multilayer 15+16, said first combined coupling forms a third to last combined thermoplastic multilayer 13+14+15+16 which is 1400 micrometers thick.

The method comprises a second combined coupling between the fourth combined thermoplastic multilayer 17+18 and the third to last combined thermoplastic multilayer 13+14+15+16, said second combined coupling forms a penultimate combined thermoplastic multilayer 17+18+13+14+15+16 that is 2100 micrometers thick.

The method includes the last combined coupling between the first thermoplastic multilayer 11+12 and the penultimate combined thermoplastic multilayer 17+18+13+14+15+16. Said last combined coupling forms the sheet 10 of thermoplastic laminate 1 according to the third embodiment. The sheet 10 is 2550 micrometers thick, i.e., 2.55 mm.

An embossing operation may be provided at the end of the last combined coupling. Advantageously, the embossing operation is provided only after the last combined coupling to preserve the outer surface of the first combined thermoplastic multilayer 11+12. The embossing operation allows to provide the desired pattern of the sheet 10 of thermoplastic laminate 1.

The methods of manufacturing the sheet 10 of thermoplastic laminate 1 according to the three embodiments of the present invention include that at the end of each coupling the combined thermoplastic multilayer is cooled before being used again for a further machine cycle 100 to couple it further to other layers or thermoplastic multilayer according to whether the coupling is single or combined.

Advantageously, in order to avoid deformations of the previously formed combined thermoplastic multilayers, the temperatures of the delivery fluid for use in the various multiplicity of rollers 101 to 108 is sufficient to make a contact surface between the first layer 21 and the second layer 22 reach the softening point. Temperatures Ti-1 to Ti-8 and temperature T4 are chosen after experimental field studies to prevent the entire thickness of the first layer 21 and the entire thickness of the second layer 22 from reaching a softening point which corresponds to a softening temperature which depends on the material of the thermoplastic layers 11-12 used. Advantageously, said temperatures Ti-1 to Ti-8 and temperature T4 are chosen only to soften the contact surface between the first layer 21 and the second layer 22 during the machine cycle 10 to promote the coupling by pressing of the first layer 21 and the second layer 22.

The speeds V1-V8 of the multiplicity of rollers 101-108 are chosen as a function of temperatures Ti-1 to Ti-8 and of temperature T4 so that the first layer 21 and the second layer 22 can be coupled well without deformations and without stretching, so that all the combinations of the layers 21-22 and also of the sheet 10 of thermoplastic material 1 are advantageously homogeneous and uniform so as to have mechanical properties and resistance to stress and shocks comparable to those of HPL decorative laminate product sheets, to have flatness properties comparable to those of the HPL sheets, which are not subject to deformation and do not have edges which bend upwards in the corners, are easy to be applied to said surfaces, do not crack on the edges of the surfaces, do not have humidity-related problems nor have problems of application to the surfaces in humid environments, and have uniform color on the entire thickness of the sheet 10.

The speeds V1-V8 of the multiplicity of rollers 101-108 decreases as the thickness of the layers 21 and 22 which are being coupled increase, as shown in the three manufacturing methods described above for the three embodiments of the present invention.

Sheets 10 of thermoplastic laminate 1 thicker than 4 mm are subject to manufacturing problems because, during the machine cycle 100, the combined thermoplastic laminate multilayer would be too thick and may not pass through the multiplicity of rollers 101 to 108, thus creating problems of flatness, homogeneousness, and uniformity of the thermoplastic laminate 1. Furthermore, the combined thermoplastic laminate multilayers very often become too rigid and cannot be pressed well by the coupling rollers 103 of the machine 100 and it would be necessary to add a lot of glue to glue them as a consequence. The massive addition of glue as known in background art would instead not achieve the technical properties comparable to those of the HPL sheet by the sheet 10 of thermoplastic laminate 1, which would no longer be sufficiently resistant to shocks and to mechanical stress as occurs instead for the sheet 10 of thermoplastic laminate 1 of the present invention.

In brief, the method of manufacturing the sheet 10 of thermoplastic laminate 1 consisting only of a multiplicity of thermoplastic layers 11 to 18 comprises a multiplicity of cycles, each cycle of said multiplicity of cycles including a first operation of heating only a contact surface between the first layer 21 and the second layer 22 to the softening point, which corresponds to the softening temperature. Said first layer 21 and the second layer 22 are chosen from a list comprising a single thermoplastic layer 11 to 18 of said multiplicity of thermoplastic layers 11 to 18 and a second combined thermoplastic multilayer 11+12, 13+14, 15+16, 13+14+15+16, 17+18, 17+18+13+14+15+16 of a multiplicity of combined thermoplastic multilayers 11+12, 13+14, 15+16, 13+14+15+16, 17+18, 17+18+13+14+15+16 which were obtained during previous cycles of said multiplicity of cycles.

Said first operation of heating only one contact surface between a first layer 21 and a second layer 22 occurs gradually in two steps, which may be performed in sequence or alternatively, a first step of said two steps which consists in passing the first layer 21 and said second layer 22 in contact with a heated hydrodynamic fluid and a second step of said two steps, which provides for said first layer 21 and said second layer 22 being heated by heating lamps 113. No glues are used between the first layer 21 and the second layer 22.

The manufacturing method also includes a second operation of coupling by pressing said first layer 21 and said second layer 22 to obtain a combined multilayer 21+22 of said multiplicity of combined thermoplastic multilayers 11+12, 13+14, 15+16, 13+14+15+16, 17+18, 17+18+13+14+15+16.

Said second coupling operation by pressing said first layer 21 and said second layer 22 has a sliding speed of the first layer 21 and of the second layer 22 which depends on the thickness of the first layer 21 and of the second layer 22, and said sliding speed decreases as a function of an increase of the thickness of the first layer 21 and of the second layer 22.

Finally, the manufacturing method comprises a third operation of cooling said combined multilayer 21+22 before proceeding with a further cycle of said multiplicity of cycles, said further cycle including the coupling of said combined multilayer 21+22 to another first or second layer 21, 22.

Said third operating of cooling said combined multilayer 21+22 occurs gradually by passing said combined multilayer 21+22 through a multiplicity of cooling rollers 105 to 108 in line, which gradually put said combined multilayer 21+22 into contact with the hydrodynamic fluids at progressively lower temperatures Ti-5 to Ti-8.

The embossing operation on the outer surface of the sheet 10 of thermoplastic laminate 1 at said at least one superficial thermoplastic layer 11 is provided when a combined thermoplastic multilayer 11+12, which was coupled to said at least one superficial thermoplastic layer 11 in a previous cycle of the multiplicity of cycles, is coupled again in a last cycle of the multiplicity of cycles to another first or second layer 21, 22.

The manufacturing method acts to obtain the sheet 10 of thermoplastic laminate 1 univocally according to the present invention without the use of glue between one layer 21 and the other 22 of the multiplicity of thermoplastic layers 11 to 18.

A mounting procedure is used to mount the sheet 10 of thermoplastic laminate 1 to a surface of a piece of furniture or a structure made of wood or particleboard materials, as, for example, medium density fiberboards, so-called MDF. The mounting procedure includes gluing said sheets 10 of thermoplastic laminate 1 onto the surface with the same methods used for the HPL sheets. Alternatively, the mounting of sheets 10 of thermoplastic laminate 1 includes heating a basic surface of the sheet 10 of thermoplastic laminate 1 and pressing the sheet 10 of thermoplastic laminate 1 directly on the surface, so as to reduce the use of glues drastically and advantageously. Said sheets 10 of thermoplastic laminate 1 can be advantageously applied to surfaces of pieces of furniture or structures made of wood or particleboard materials thus facing such surfaces.

A piece of furniture or a structure made of wood or particleboard materials which mounts said sheets 10 of thermoplastic laminate 1 to the surfaces thereof are advantageously more shock-resistant and the surface is flatter. The piece of furniture or the structure mounting the sheet 10 of thermoplastic laminate 1 to at least one surface advantageously has higher resistance to stress and to shocks comparable to that of HPL decorative laminated product sheets, the surface of the piece of furniture or of the structure achieves flatness properties which are comparable to those of the HPL sheets. The piece of furniture or structure is assembled using much less glue. The surface of the piece of furniture or of the structure is not subject to deformation and does not have edges that bend upwards on the corners. Advantageously, mounting said sheets 10 of thermoplastic laminate 1 is advantageously easy, the edges of said surfaces do not crack, there are no humidity-related problems and there are no problems of application to said surfaces in humid environments, which has uniform color on the entire thickness of the sheet 10.

Said structure made of wood or particleboard materials comprises at least one surface which mounts said sheet 10 made of thermoplastic laminate 1 according to the present invention. Said sheet 10 of thermoplastic laminate 1 mounted to said surface is manufactured according to the manufacturing method of the present invention.

Said sheet 10 of thermoplastic laminate 1 is mounted to said surface of the piece of furniture or structure made of wood or particleboard materials by pressing or gluing.

Alternatively, a TNT or fiberglass film can be mounted to the back of the sheet 10 of thermoplastic laminate 1 to advantageously increase the mechanical properties, in particular, the technical properties related to flexural modulus.

Again alternatively, the TNT or fiberglass film can be provided between one combined multilayer and the other to advantageously increase some mechanical properties.

## Claims

1. A method for manufacturing a sheet (10) of thermoplastic laminate (1), wherein said sheet (10) comprises a multiplicity of thermoplastic layers (11-18) comprising at least one first superficial thermoplastic layer (11) and at least two basic thermoplastic layers (12-18), the method comprising the following steps:
- coupling the first superficial thermoplastic layer (11) and a second thermoplastic layer (12) of said basic thermoplastic layers (12-18) to one another without glue by performing a multiplicity of cycles, wherein each cycle of said multiplicity of cycles includes a first operation of heating to the softening point, which corresponds to the softening temperature, only a contact surface between the first thermoplastic layer (11) and the second thermoplastic layer (12), wherein said first operation occurs gradually in two steps, wherein a first step of said two steps comprises the passage of said first thermoplastic layer (11) and second thermoplastic layer (12) in contact with a heated hydrodynamic fluid, and wherein a second step of said two steps provides for said first thermoplastic layer (11) and second thermoplastic layer (12) being heated, wherein each cycle of said multiplicity of cycles includes a second operation of pressing the heated first thermoplastic layer (11) and second thermoplastic layer (12) onto one another without glue to form a first combined thermoplastic multilayer (11, 12) free from glue, wherein said second coupling operation by pressing said first thermoplastic layer (11) and second thermoplastic layer (12) has a sliding speed of said first thermoplastic layer (11) and second thermoplastic layer (12) which depends on the thickness of said first thermoplastic layer (11) and second thermoplastic layer (12), said sliding speed decreasing as a function of an increase of the thickness of said first thermoplastic layer (11) and second thermoplastic layer (12), and wherein each cycle of said multiplicity of cycles includes a third operation of cooling said first combined thermoplastic multilayer (11, 12) before proceeding with a further cycle of said multiplicity of cycles,
- the first thermoplastic layer (11) and the second thermoplastic layer (12) each being a film free of plasticizers and comprising at least one of Polyvinyl chloride, Polyethylene terephthalate, Polyethylene terephthalate glycol, Polypropylene, and Polyethylene; and
- performing a further cycle of said multiplicity of cycles including the coupling a third thermoplastic layer (13) of said basic thermoplastic layers (12-18), wherein said third thermoplastic layer (13) is a film comprising at least one of Polyvinyl chloride, Polyethylene terephthalate, Polyethylene terephthalate glycol, Polypropylene, and Polyethylene, to the second thermoplastic layer (12) by heating coupling surfaces of the third thermoplastic layer (13) and the second thermoplastic layer (12), and pressing the heated third thermoplastic layer (13) and the first combined thermoplastic multilayer (11, 12) onto one another without glue to form a multilayer sheet (10) of thermoplastic laminate (1):
- free from glue;
- being planar, flat, and rigid; and
- having a thickness from between 0.75 mm to 4 mm.

2. The method according to claim 1, wherein the first thermoplastic layer (11) is a rigid or semi-rigid superficial thermoplastic layer, and/or a crystal or a superficial layer treated with a finishing paint.

3. The method according to claim 2, wherein the first superficial thermoplastic layer (11) is a transparent, crystal superficial thermoplastic layer having a plasticization between 10 phr to 30 phr.

4. The method according to claim 3, wherein the crystal superficial thermoplastic layer (11) is filled with mineral filers comprising at least one of TiO₂, calcium carbonate, silica, and talc.

5. The method according to claim 2, wherein:
- the first superficial thermoplastic layer (11) is transparent and has a thickness of 100 micrometers;
- each of the ones of the first (11), second (12), and third (13) thermoplastic layers has a thickness of 350 micrometers; and
- the sheet (10) of thermoplastic laminate (1) has a thickness of 800 micrometers.

6. The method according to claim 1, which further comprises manufacturing each of the first (11), second (12), and third (13) thermoplastic layers by calendering and extruding.

7. The method according to claim 1, applying the sheet (10) of thermoplastic laminate (1) by pressing or gluing to a surface of one of a piece of furniture, a wood structures, and particleboard.

8. The method according to claim 1, which further comprises, before coupling the third thermoplastic layer (13) to the first combined thermoplastic multilayer (11, 12):
- coupling a fourth thermoplastic layer to the third thermoplastic layer (13) without glue by surface heating coupling surfaces of the third (13) and fourth thermoplastic layers and pressing the heated third (13) and fourth thermoplastic layers onto one another without glue to form a second combined thermoplastic multilayer free from glue, the fourth thermoplastic layer being a film free of plasticizers and comprising at least one of Polyvinyl chloride, Polyethylene terephthalate, Polyethylene terephthalate glycol, Polypropylene, and Polyethylene;
- coupling fifth and sixth thermoplastic layers to one another without glue by surface heating coupling surfaces of the fifth and sixth thermoplastic layers and pressing the heated fifth and sixth thermoplastic layers onto one another without glue to form a third combined thermoplastic multilayer free from glue, the fifth and sixth thermoplastic layers each being a film free of plasticizers and comprising at least one of Polyvinyl chloride, Polyethylene terephthalate, Polyethylene terephthalate glycol, Polypropylene, and Polyethylene;
- coupling the second combined thermoplastic multilayer and the third combined thermoplastic multilayer to one another without glue by surface heating coupling surfaces of the second and third combined thermoplastic multilayers and pressing the heated second and third combined thermoplastic multilayers onto one another without glue to form a fourth combined thermoplastic multilayer free from glue; and
- coupling the first combined thermoplastic multilayer (11, 12) and the fourth combined thermoplastic multilayer to one another without glue by surface heating coupling surfaces of the first (11, 12) and fourth combined thermoplastic multilayers and pressing the heated second and fourth combined thermoplastic multilayers onto one another without glue to form the sheet (10) of thermoplastic laminate (1).

9. The method according to claim 8, wherein:
- an upper layer (11) of the first combined thermoplastic multilayer (11, 12) is a transparent superficial layer 100 micrometers thick;
- each of the second (12), third (13), fourth, fifth, and sixth thermoplastic layers is 350 micrometers thick; and
- the sheet (10) of thermoplastic laminate (1) is 1850 micrometers thick.

10. The method according to claim 1, which further comprises, before coupling the third thermoplastic layer (13) to the first combined thermoplastic multilayer (11, 12):
- coupling a fourth thermoplastic layer to the third thermoplastic layer (13) without glue by surface heating coupling surfaces of the third (13) and fourth thermoplastic layers and pressing the heated third (13) and fourth thermoplastic layers onto one another without glue to form a second combined thermoplastic multilayer free from glue, the fourth thermoplastic layer being a film free of plasticizers and comprising at least one of Polyvinyl chloride, Polyethylene terephthalate, Polyethylene terephthalate glycol, Polypropylene, and Polyethylene;
- coupling fifth and sixth thermoplastic layers to one another without glue by surface heating coupling surfaces of the fifth and sixth thermoplastic layers and pressing the heated fifth and sixth thermoplastic layers onto one another without glue to form a third combined thermoplastic multilayer free from glue, the fifth and sixth thermoplastic layers each being a film free of plasticizers and comprising at least one of Polyvinyl chloride, Polyethylene terephthalate, Polyethylene terephthalate glycol, Polypropylene, and Polyethylene;
- coupling seventh and eighth thermoplastic layers to one another without glue by surface heating coupling surfaces of the seventh and eighth thermoplastic layers and pressing the heated seventh and eighth thermoplastic layers onto one another without glue to form a fourth combined thermoplastic multilayer free from glue, the seventh and eighth thermoplastic layers each being a film free of plasticizers and comprising at least one of Polyvinyl chloride, Polyethylene terephthalate, Polyethylene terephthalate glycol, Polypropylene, and Polyethylene;
- coupling the second combined thermoplastic multilayer and the third combined thermoplastic multilayer to one another without glue by surface heating coupling surfaces of the second and third combined thermoplastic multilayers and pressing the heated second and third combined thermoplastic multilayers onto one another without glue to form a fifth combined thermoplastic multilayer free from glue;
- coupling the fourth combined thermoplastic multilayer and the fifth combined thermoplastic multilayer to one another without glue by surface heating coupling surfaces of the fourth and fifth combined thermoplastic multilayers and pressing the heated fourth and fifth combined thermoplastic multilayers onto one another without glue to form a sixth combined thermoplastic multilayer free from glue; and
- coupling the first combined thermoplastic multilayer (11, 12) and the sixth combined thermoplastic multilayer to one another without glue by surface heating coupling surfaces of the first (11, 12) and sixth combined thermoplastic multilayers and pressing the heated first (11, 12) and sixth combined thermoplastic multilayers onto one another without glue to form the sheet (10) of thermoplastic laminate (1).

11. The method according to claim 10, wherein:
- an upper layer (11) of the first combined thermoplastic multilayer (11, 12) is a transparent superficial layer 100 micrometers thick;
- each of the second (12), third (13), fourth, fifth, sixth, seventh, and eighth thermoplastic layers is 350 micrometers thick; and
- the sheet (10) of thermoplastic laminate (1) is 2550 micrometers thick.

12. The method according to claim 1, wherein the sheet (10) of thermoplastic laminate (1) has:
- mechanical shock resistance properties comprising 152.4 cm (60 inches) for ball impact resistance and 63.5 to 71.12 cm (25 to 28 inches) for dart impact resistance;
- flatness properties comprising a flatness test result of +/- 3 mm for a sheet having a thickness of 0.8 mm thick +/- 0.05 mm;
- a dimensional stability lower than 0.2% both in a direction of a sheet-manufacturing machine and in a crosswise direction;
- a surface resistance at greater than 1500 cycles for printed sheets and greater than approximately 4000 cycles for sheets of uniform color; and
- a post-forming radius at room temperature of 8 mm.

13. The method according to claim 1, which further comprises carrying out a machine coupling cycle by:
- coupling the first (11) and second (12) thermoplastic layers with a machine having the first thermoplastic layer (11) on a first cylinder as a first layer and the second thermoplastic layer (12) on a second cylinder as a second layer;
- tautly feeding the first and second layers onto respective sets of first and second comb rollers of the machine, at least one roller of each of the sets of first and second comb rollers heated to a respective comb roller temperature by a fluid that heats the respective first and second layers as the first and second layers are fed therethrough;
- tautly feeding the first and second layers from the comb rollers to coupling rollers downstream of the comb rollers, the coupling rollers pressing together the first and second layers with pressure to form the first combined thermoplastic multilayer (11, 12), at least one of the coupling rollers heated to a coupling temperature by a fluid that heats the first combined thermoplastic multilayer (11, 12) as the first combined thermoplastic multilayer (11, 12) is fed therethrough;
- heating the first combined thermoplastic multilayer (11, 12) adjacent the coupling rollers with a heater to promote coupling of the first (11) and second (12) layers to form the first combined thermoplastic multilayer (11, 12); and
- tautly feeding the first combined thermoplastic multilayer (11, 12) from the coupling rollers to at least one downstream set of cooling rollers, at least one of the cooling rollers cooled to a cooling temperature by a fluid that cools the first combined thermoplastic multilayer (11, 12) as the first combined thermoplastic multilayer (11, 12) is fed therethrough.

14. The method according to claim 13, which further comprises restarting the first combined thermoplastic multilayer (11, 12) as either the first layer (11) or the second layer (12) for further combined coupling with another combined multilayer previously formed by a previous machine coupling cycle after the first combined thermoplastic multilayer (11, 12) has cooled.

15. The method according to claim 13, which further comprises:
- supporting the first combined thermoplastic multilayer (11, 12) downstream of the cooling rollers on a flat and planar surface; and
- cutting the first combined thermoplastic multilayer (11, 12) into flat and planar sheets with a cutter disposed adjacent the cooling rollers.

## Patentansprüche

1. Verfahren zur Herstellung einer Platte (10) aus thermoplastischem Laminat (1), wobei die Platte (10) eine Vielzahl von thermoplastischen Schichten (11-18) umfasst, die mindestens eine erste oberflächliche thermoplastische Schicht (11) und mindestens zwei thermoplastische Grundschichten (12-18) umfassen, wobei das Verfahren die folgenden Schritte umfasst:
- Koppeln der ersten oberflächlichen thermoplastischen Schicht (11) und einer zweiten thermoplastischen Schicht (12) der thermoplastischen Grundschichten (12-18) ohne Klebstoff miteinander durch Ausführen einer Vielzahl von Zyklen, wobei jeder Zyklus der Vielzahl von Zyklen einen ersten Vorgang des Erhitzens auf den Erweichungspunkt umfasst, der der Erweichungstemperatur entspricht, nur eine Kontaktfläche zwischen der ersten thermoplastischen Schicht (11) und der zweiten thermoplastischen Schicht (12) umfasst, wobei der erste Vorgang schrittweise in zwei Schritten erfolgt, wobei ein erster Schritt der beiden Schritte das Durchlaufen der ersten thermoplastischen Schicht (11) und der zweiten thermoplastischen Schicht (12) in Kontakt mit einem erhitzten hydrodynamischen Fluid umfasst, und wobei ein zweiter Schritt der beiden Schritte dafür sorgt, dass die erste thermoplastische Schicht (11) und die zweite thermoplastische Schicht (12) erhitzt werden, wobei jeder Zyklus der Vielzahl von Zyklen einen zweiten Vorgang des Aufpressens der erhitzten ersten thermoplastischen Schicht (11) und der zweiten thermoplastischen Schicht (12) aufeinander ohne Klebstoff umfasst, um eine erste kombinierte thermoplastische ohne Klebstoff Mehrfachschicht (11, 12) zu bilden, wobei der zweite Kupplungsvorgang durch Pressen der ersten thermoplastischen Schicht (11) und der zweiten thermoplastischen Schicht (12) eine Gleitgeschwindigkeit der ersten thermoplastischen Schicht (11) und der zweiten thermoplastischen Schicht (12) aufweist, die von der Dicke der ersten thermoplastischen Schicht (11) und der zweiten thermoplastischen Schicht (12) abhängt, wobei die Gleitgeschwindigkeit in Abhängigkeit von einer Zunahme der Dicke der ersten thermoplastischen Schicht (11) und der zweiten thermoplastischen Schicht (12) abnimmt, und wobei jeder Zyklus der Vielzahl von Zyklen einen dritten Vorgang des Kühlens der ersten kombinierten thermoplastischen Mehrfachschicht (11, 12) umfasst, bevor mit einem weiteren Zyklus der Vielzahl von Zyklen fortgefahren wird,
- die erste thermoplastische Schicht (11) und die zweite thermoplastische Schicht (12) jeweils eine weichmacherfreie Folie sind und mindestens eines von Polyvinylchlorid, Polyethylenterephthalat, Polyethylenterephthalatglykol, Polypropylen und Polyethylen umfassen; und
- Durchführen eines weiteren Zyklus der Vielzahl von Zyklen, einschließlich des Koppelns einer dritten thermoplastischen Schicht (13) der thermoplastischen Grundschichten (12-18), wobei die dritte thermoplastische Schicht (13) eine Folie ist, die mindestens eines von Polyvinylchlorid, Polyethylenterephthalat, Polyethylenterephthalatglykol, Polypropylen und Polyethylen umfasst, mit der zweiten thermoplastischen Schicht (12) durch Erhitzen der Verbindungsflächen der dritten thermoplastischen Schicht (13) und der zweiten thermoplastischen Schicht (12), und Pressen der erhitzten dritten thermoplastischen Schicht (13) und der ersten kombinierten thermoplastischen Mehrfachschicht (11, 12) aufeinander ohne Klebstoff, um eine Mehrfachschichtplatte (10) aus thermoplastischem Laminat (1) zu bilden:
- frei von Klebstoff;
- die planar, flach und starr ist; und
- mit einer Dicke zwischen 0,75 mm und 4 mm.

2. Verfahren nach Anspruch 1, wobei die erste thermoplastische Schicht (11) eine starre oder halbstarre oberflächliche thermoplastische Schicht und/oder eine Kristall- oder eine mit einer Decklackierung behandelte oberflächliche Schicht ist.

3. Verfahren nach Anspruch 2, wobei die erste oberflächliche thermoplastische Schicht (11) eine transparente, kristalline oberflächliche thermoplastische Schicht mit einer Plastifizierung zwischen 10 phr und 30 phr ist.

4. Verfahren nach Anspruch 3, wobei die kristalline thermoplastische Oberflächenschicht (11) mit mineralischen Füllstoffen gefüllt ist, die mindestens eines von TiO₂, Calciumcarbonat, Siliciumdioxid und Talk enthalten.

5. Verfahren nach Anspruch 2, wobei:
- die erste oberflächliche thermoplastische Schicht (11) transparent ist und eine Dicke von 100 Mikrometern aufweist;
- jede der ersten (11), zweiten (12) und dritten (13) thermoplastischen Schichten eine Dicke von 350 Mikrometern aufweist; und
- die Platte (10) aus thermoplastischem Laminat (1) eine Dicke von 800 Mikrometern aufweist.

6. Verfahren nach Anspruch 1, das ferner die Herstellung jeder der ersten (11), zweiten (12) und dritten (13) thermoplastischen Schichten durch Kalandrieren und Extrudieren umfasst.

7. Verfahren nach Anspruch 1, bei dem die Platte (10) aus thermoplastischem Laminat (1) durch Pressen oder Kleben auf eine Oberfläche eines Möbelstücks, einer Holzkonstruktion oder einer Spanplatte aufgebracht wird.

8. Verfahren nach Anspruch 1, das ferner umfasst, vor der Kopplung der dritten thermoplastischen Schicht (13) mit der ersten kombinierten thermoplastischen Mehrfachschicht (11, 12):
- Koppeln einer vierten thermoplastischen Schicht mit der dritten thermoplastischen Schicht (13) ohne Klebstoff durch Oberflächenheizung der Kopplungsflächen der dritten (13) und vierten thermoplastischen Schicht und Pressen der erhitzten dritten (13) und vierten thermoplastischen Schicht ohne Klebstoff aufeinander, um eine zweite kombinierte thermoplastische Mehrfachschicht ohne Klebstoff zu bilden, wobei die vierte thermoplastische Schicht eine weichmacherfreie Folie ist und mindestens eines von Polyvinylchlorid, Polyethylenterephthalat, Polyethylenterephthalatglykol, Polypropylen und Polyethylen umfasst;
- Koppeln der fünften und sechsten thermoplastischen Schicht ohne Klebstoff miteinander durch Oberflächenheizung der Kopplungsflächen der fünften und sechsten thermoplastischen Schicht und Pressen der erhitzten fünften und sechsten thermoplastischen Schicht ohne Klebstoff aufeinander, um eine dritte kombinierte thermoplastische Mehrfachschicht ohne Klebstoff zu bilden, wobei die fünfte und sechste thermoplastische Schicht jeweils eine weichmacherfreie Folie sind und mindestens eines von Polyvinylchlorid, Polyethylenterephthalat, Polyethylenterephthalatglykol, Polypropylen und Polyethylen umfasst;
- Koppeln der zweiten kombinierten thermoplastischen Mehrfachschicht und der dritten kombinierten thermoplastischen Mehrfachschicht ohne Klebstoff miteinander durch Oberflächenheizung der Kopplungsflächen der zweiten und dritten kombinierten thermoplastischen Mehrfachschichten und Pressen der erhitzten zweiten und dritten kombinierten thermoplastischen Mehrfachschichten ohne Klebstoff aufeinander, um eine vierte kombinierte thermoplastische Mehrfachschicht ohne Klebstoff zu bilden; und
- Koppeln der ersten kombinierten thermoplastischen Mehrfachschicht (11, 12) und der vierten kombinierten thermoplastischen Mehrschichtfolie ohne Klebstoff miteinander durch Oberflächenheizung der Kopplungsflächen der ersten (11, 12) und vierten kombinierten thermoplastischen Mehrfachschicht und Pressen der erhitzten zweiten und vierten kombinierten thermoplastischen Mehrfachschicht ohne Klebstoff aufeinander, um die Platte (10) das thermoplastische Laminat (1) zu bilden.

9. Verfahren nach Anspruch 8, wobei:
- eine obere Schicht (11) der ersten kombinierten thermoplastischen Mehrfachschicht (11, 12) eine transparente Oberflächenschicht mit einer Dicke von 100 Mikrometern ist;
- jede der zweiten (12), dritten (13), vierten, fünften und sechsten thermoplastischen Schichten eine Dicke von 350 Mikrometern aufweist; und
- die Platte (10) aus thermoplastischem Laminat (1) eine Dicke von 1850 Mikrometern aufweist.

10. Verfahren nach Anspruch 1, das ferner umfasst, bevor die dritte thermoplastische Schicht (13) mit der ersten kombinierten thermoplastischen Mehrfachschicht (11, 12) verbunden wird:
- Koppeln einer vierten thermoplastischen Schicht mit der dritten thermoplastischen Schicht (13) ohne Klebstoff durch Oberflächenheizung der Kopplungsflächen der dritten (13) und vierten thermoplastischen Schicht und Pressen der erhitzten dritten (13) und vierten thermoplastischen Schicht ohne Klebstoff aufeinander, um eine zweite kombinierte thermoplastische Mehrfachschicht ohne Klebstoff zu bilden, wobei die vierte thermoplastische Schicht eine weichmacherfreie Folie ist und mindestens eines von Polyvinylchlorid, Polyethylenterephthalat, Polyethylenterephthalatglykol, Polypropylen und Polyethylen umfasst;
- Koppeln der fünften und sechsten thermoplastischen Schicht ohne Klebstoff miteinander durch Oberflächenheizung der Kopplungsflächen der fünften und sechsten thermoplastischen Schicht und Pressen der erhitzten fünften und sechsten thermoplastischen Schicht ohne Klebstoff aufeinander, um eine dritte kombinierte thermoplastische Mehrfachschicht ohne Klebstoff zu bilden, wobei die fünfte und sechste thermoplastische Schicht jeweils eine weichmacherfreie Folie sind und mindestens eines von Polyvinylchlorid, Polyethylenterephthalat, Polyethylenterephthalatglykol, Polypropylen und Polyethylen umfasst;
- Koppeln der siebten und achten thermoplastischen Schicht ohne Klebstoff miteinander durch Oberflächenheizung der Kopplungsflächen der siebten und achten thermoplastischen Schicht und Pressen der erhitzten siebten und achten thermoplastischen Schicht ohne Klebstoff aufeinander, um eine vierte kombinierte thermoplastische Mehrfachschicht ohne Klebstoff zu bilden, wobei die siebte und achte thermoplastische Schicht jeweils eine weichmacherfreie Folie sind und mindestens eines von Polyvinylchlorid, Polyethylenterephthalat, Polyethylenterephthalatglykol, Polypropylen und Polyethylen umfasst;
- Koppeln der zweiten kombinierten thermoplastischen Mehrfachschicht und der dritten kombinierten thermoplastischen Mehrfachschicht ohne Klebstoff miteinander durch Oberflächenheizung der Kopplungsflächen der zweiten und dritten kombinierten thermoplastischen Mehrfachschicht und Pressen der erhitzten zweiten und dritten kombinierten thermoplastischen Mehrfachschicht ohne Klebstoff aufeinander, um eine fünfte kombinierte thermoplastische Mehrfachschicht ohne Klebstoff zu bilden;
- Koppeln der vierten kombinierten thermoplastischen Mehrfachschicht und der fünften kombinierten thermoplastischen Mehrfachschicht ohne Klebstoff miteinander durch Oberflächenheizung der Kopplungsflächen der vierten und fünften kombinierten thermoplastischen Mehrfachschicht und Pressen der erhitzten vierten und fünften kombinierten thermoplastischen Mehrfachschicht ohne Klebstoff aufeinander, um eine sechste kombinierte thermoplastische Mehrfachschicht ohne Klebstoff zu bilden; und
- Koppeln der ersten kombinierten thermoplastischen Mehrfachschicht (11, 12) und die sechste kombinierte thermoplastische Mehrfachschicht ohne Klebstoff miteinander durch Oberflächenheizung der Kopplungsflächen der ersten (11, 12) und sechsten kombinierten thermoplastischen Mehrfachschicht und Pressen der erhitzten ersten (11, 12) und sechsten kombinierten thermoplastische Mehrfachschicht ohne Klebstoff aufeinander, um die Platte (10) aus thermoplastischem Laminat (1) zu bilden.

11. Verfahren nach Anspruch 10, wobei:
- eine obere Schicht (11) der ersten kombinierten thermoplastischen Mehrfachschicht (11, 12) eine transparente Oberflächenschicht mit einer Dicke von 100 Mikrometern ist;
- jede der zweiten (12), dritten (13), vierten, fünften, sechsten, siebten und achten thermoplastischen Schichten 350 Mikrometer dick ist; und
- die Platte (10) aus thermoplastischem Laminat (1) eine Dicke von 2550 Mikrometern aufweist.

12. Verfahren nach Anspruch 1, wobei die Platte (10) aus thermoplastischem Laminat (1) folgende Eigenschaften aufweist:
- mechanische Stoßfestigkeitseigenschaften, die 152,4 cm (60 Zoll) für die Kugeleinschlagfestigkeit und 63,5 bis 71,12 cm (25 bis 28 Zoll) für die Dart-Einschlagfestigkeit umfassen;
- Ebenheitseigenschaften einschließlich eines Ebenheitsprüfungsergebnisses von +/- 3 mm für eine Platte mit einer Dicke von 0,8 mm +/- 0,05 mm;
- eine Dimensionsstabilität von weniger als 0,2% sowohl in Richtung einer Folienherstellungsmaschine als auch in Querrichtung;
- einen Oberflächenwiderstand von mehr als 1500 Zyklen für bedruckte Folien und mehr als etwa 4000 Zyklen für Folien mit einheitlicher Farbe; und
- einem Nachformungsradius bei Raumtemperatur von 8 mm.

13. Verfahren nach Anspruch 1, das ferner die Durchführung eines Maschinenkupplungszyklus umfasst, indem:
- Koppeln der ersten (11) und zweiten (12) thermoplastischen Schicht mit einer Maschine, wobei die erste thermoplastische Schicht (11) auf einem ersten Zylinder als erste Schicht und die zweite thermoplastische Schicht (12) auf einem zweiten Zylinder als zweite Schicht angeordnet ist;
- Unter Spannung Zuführen der ersten und zweiten Schicht auf jeweilige Sätze erster und zweiter Kammwalzen der Maschine, wobei mindestens eine Walze jedes Satzes erster und zweiter Kammwalzen durch ein Fluid, das die jeweilige erste und zweite Schicht erhitzt, wenn die erste und zweite Schicht durch sie hindurchgeführt werden, auf eine jeweilige Kammwalzentemperatur erwärmt wird;
- Unter Spannung Zuführen der ersten und zweiten Schicht von den Kammwalzen zu den Kammwalzen nachgeschalteten Kupplungswalzen, wobei die Kupplungswalzen die erste und zweite Schicht mit Druck zusammenpressen, um die erste kombinierte thermoplastische Mehrfachschicht (11, 12) zu bilden, mindestens eine der Kupplungswalzen wird durch ein Fluid, das die erste kombinierte thermoplastische Mehrfachschicht (11, 12) erwärmt, während die erste kombinierte thermoplastische Mehrfachschicht (11, 12) durch sie hindurchgeführt wird, auf eine Kupplungstemperatur erhitzt;
- Erhitzten der ersten kombinierten thermoplastischen Mehrfachschicht (11, 12) neben den Kupplungswalzen mit einer Heizvorrichtung, um die Kupplung der ersten (11) und zweiten (12) Schicht zu fördern um die erste kombinierte thermoplastische Mehrfachschicht (11, 12) zu bilden; und
- Unter Spannung Zuführen der ersten kombinierten thermoplastischen Mehrfachschicht (11, 12) von den Kupplungswalzen zu mindestens einem stromabwärts gelegenen Satz von Kühlwalzen, wobei mindestens eine der Kühlwalzen durch ein Fluid auf eine Kühltemperatur gekühlt wird, das die erste kombinierte thermoplastische Mehrschichtfolie (11, 12) kühlt, während die erste kombinierte thermoplastische Mehrschichtfolie (11, 12) durch sie hindurchgeführt wird.

14. Verfahren nach Anspruch 13, das ferner umfasst: Neustarten der ersten kombinierten thermoplastischen Mehrfachschicht (11, 12) entweder als erste Schicht (11) oder als zweite Schicht (12) zur weiteren kombinierten Kopplung mit einer anderen kombinierten Mehrfachschicht, die zuvor durch einen vorherigen Maschinenkopplungszyklus gebildet wurde, nachdem die erste kombinierte thermoplastische Mehrfachschicht (11, 12) abgekühlt ist.

15. Verfahren nach Anspruch 13, das ferner umfasst:
- das Abstützen der ersten kombinierten thermoplastischen Mehrfachschicht (11, 12) stromabwärts der Kühlwalzen auf einer flachen und ebenen Oberfläche; und
- Schneiden der ersten kombinierten thermoplastischen Mehrfachschicht (11, 12) in flache und ebene Platten mit einem Schneidwerkzeug, das neben den Kühlwalzen angeordnet ist.

## Revendications

1. . Procédé de fabrication d'une feuille (10) de stratifié thermoplastique (1), dans lequel ladite feuille (10) comprend une multiplicité de couches thermoplastiques (11-18) comprenant au moins une première couche thermoplastique superficielle (11) et au moins deux couches thermoplastiques de base (12-18), le procédé comprenant les étapes suivantes:
- coupler la première couche thermoplastique superficielle (11) et une deuxième couche thermoplastique (12) desdites couches thermoplastiques de base (12-18) l'une à l'autre sans colle en effectuant une multiplicité de cycles, dans laquelle chaque cycle de ladite multiplicité de cycles comprend une première opération de chauffage jusqu'au point de ramollissement, qui correspond à la température de ramollissement, uniquement une surface de contact entre la première couche thermoplastique (11) et la deuxième couche thermoplastique (12), dans lequel ladite première opération se déroule progressivement en deux étapes, dans lequel une première étape desdites deux étapes comprend le passage de ladite première couche thermoplastique (11) et de la deuxième couche thermoplastique (12) en contact avec un fluide hydrodynamique chauffé, et dans lequel une deuxième étape desdites deux étapes prévoit que ladite première couche thermoplastique (11) et la deuxième couche thermoplastique (12) soient chauffées, dans lequel chaque cycle de ladite multiplicité de cycles comprend une deuxième opération consistant à presser la première couche thermoplastique chauffée (11) et la deuxième couche thermoplastique chauffée (12) l'une sur l'autre sans colle pour former une première multicouche thermoplastique combinée (11, 12) exempte de colle, dans laquelle ladite deuxième opération de couplage par pressage de ladite première couche thermoplastique (11) et de ladite deuxième couche thermoplastique (12) a une vitesse de glissement de ladite première couche thermoplastique (11) et de ladite deuxième couche thermoplastique (12) qui dépend de l'épaisseur de ladite première couche thermoplastique (11) et de ladite deuxième couche thermoplastique (12), ladite vitesse de glissement diminuant en fonction d'une augmentation de l'épaisseur de ladite première couche thermoplastique (11) et de ladite deuxième couche thermoplastique (12), et dans lequel chaque cycle de ladite multiplicité de cycles comprend une troisième opération de refroidissement de ladite première multicouche thermoplastique combinée (11, 12) avant de passer à un autre cycle de ladite multiplicité de cycles;
- la première couche thermoplastique (11) et la deuxième couche thermoplastique (12) étant chacune un film exempt de plastifiants et comprenant au moins l'un des composés suivants: chlorure de polyvinyle, polyéthylène téréphtalate, polyéthylène téréphtalate glycol, polypropylène et polyéthylène; et
- réaliser un cycle supplémentaire parmi ladite multiplicité de cycles comprenant le couplage d'une troisième couche thermoplastique (13) desdites couches thermoplastiques de base (12-18), dans lequel ladite troisième couche thermoplastique (13) est un film comprenant au moins l'un parmi le chlorure de polyvinyle, le polyéthylène téréphtalate, le polyéthylène téréphtalate glycol, polypropylène et polyéthylène, à la deuxième couche thermoplastique (12) en chauffant les surfaces de couplage de la troisième couche thermoplastique (13) et de la deuxième couche thermoplastique (12), et en pressant la troisième couche thermoplastique chauffée (13) et la première multicouche thermoplastique combinée (11, 12) l'une sur l'autre sans colle pour former une feuille multicouche (10) de stratifié thermoplastique (1):
- exempte de colle;
- plane, plate et rigide; et
- ayant une épaisseur comprise entre 0,75 mm et 4 mm.

2. . Procédé selon la revendication 1, dans lequel la première couche thermoplastique (11) est une couche thermoplastique superficielle rigide ou semi-rigide, et/ou un cristal ou une couche superficielle traitée avec une peinture de finition.

3. . Procédé selon la revendication 2, dans lequel la première couche thermoplastique superficielle (11) est une couche thermoplastique superficielle cristalline transparente ayant une plastification comprise entre 10 phr et 30 phr.

4. . Procédé selon la revendication 3, dans lequel la couche thermoplastique superficielle cristalline (11) est remplie de charges minérales comprenant au moins l'un parmi TiO₂, le carbonate de calcium, la silice et le talc.

5. . Procédé selon la revendication 2, dans lequel:
- la première couche thermoplastique superficielle (11) est transparente et a une épaisseur de 100 micromètres;
- chacune des première (11), deuxième (12) et troisième (13) couches thermoplastiques a une épaisseur de 350 micromètres; et
- la feuille (10) de stratifié thermoplastique (1) a une épaisseur de 800 micromètres.

6. . Procédé selon la revendication 1, qui comprend en outre la fabrication de chacune des première (11), deuxième (12) et troisième (13) couches thermoplastiques par calandrage et extrusion.

7. . Procédé selon la revendication 1, consistant à appliquer la feuille (10) de stratifié thermoplastique (1) par pressage ou collage sur une surface d'un meuble, d'une structure en bois ou d'un panneau de particules.

8. . Procédé selon la revendication 1, qui comprend en outre, avant de coupler la troisième couche thermoplastique (13) à la première multicouche thermoplastique combinée (11, 12):
- coupler une quatrième couche thermoplastique à la troisième couche thermoplastique (13) sans colle en chauffant les surfaces de couplage des troisième (13) et quatrième couches thermoplastiques et en pressant les troisième (13) et quatrième couches thermoplastiques chauffées l'une contre l'autre sans colle pour former une deuxième multicouche thermoplastique combinée exempte de colle, la quatrième couche thermoplastique étant un film exempt de plastifiants et comprenant au moins l'un des éléments suivants: chlorure de polyvinyle, polyéthylène téréphtalate, polyéthylène téréphtalate glycol, polypropylène et polyéthylène;
- coupler les cinquième et sixième couches thermoplastiques l'une à l'autre sans colle en chauffant la surface des cinquième et sixième couches thermoplastiques et en pressant les cinquième et sixième couches thermoplastiques chauffées l'une contre l'autre sans colle pour former une troisième multicouche thermoplastique combinée exempte de colle, les cinquième et sixième couches thermoplastiques étant chacune un film sans plastifiants et comprenant au moins l'un des éléments suivants: chlorure de polyvinyle, polyéthylène téréphtalate, polyéthylène téréphtalate glycol, polypropylène et polyéthylène;
- coupler la deuxième multicouche thermoplastique combinée et la troisième multicouche thermoplastique combinée l'une à l'autre sans colle en chauffant la surface des surfaces de couplage des deuxième et troisième multicouches thermoplastiques combinées et en pressant les deuxième et troisième multicouches thermoplastiques combinées chauffées l'une contre l'autre sans colle pour former une quatrième multicouche thermoplastique combinée exempte de colle; et
- coupler la première multicouche thermoplastique combinée (11, 12) et la quatrième multicouche thermoplastique combinée l'une à l'autre sans colle en chauffant la surface des premières (11, 12) et quatrièmes multicouches thermoplastiques combinées et en pressant les deuxième et quatrièmes multicouches thermoplastiques combinées chauffées l'une contre l'autre sans colle pour former la feuille (10) de stratifié thermoplastique (1).

9. . Procédé selon la revendication 8, dans lequel:
- une couche supérieure (11) de la première multicouche thermoplastique combinée (11, 12) est une couche superficielle transparente de 100 micromètres d'épaisseur;
- chacune des deuxième (12), troisième (13), quatrième, cinquième et sixième couches thermoplastiques est une couche de 350 micromètres d'épaisseur; et
- la feuille (10) de stratifié thermoplastique (1) a une épaisseur de 1850 micromètres.

10. . Procédé selon la revendication 1, qui comprend en outre, avant de coupler la troisième couche thermoplastique (13) à la première multicouche thermoplastique combinée (11, 12):
- couplage d'une quatrième couche thermoplastique à la troisième couche thermoplastique (13) sans colle, par chauffage de surface des surfaces de couplage des troisième (13) et quatrième couches thermoplastiques et pressage des troisième (13) et quatrième couches thermoplastiques chauffées l'une contre l'autre sans colle, afin de former une deuxième multicouche thermoplastique combinée exempte de colle, la quatrième couche thermoplastique étant un film exempt de plastifiants et comprenant au moins l'un des éléments suivants: chlorure de polyvinyle, polyéthylène téréphtalate, polyéthylène téréphtalate glycol, polypropylène et polyéthylène;
- coupler les cinquième et sixième couches thermoplastiques l'une à l'autre sans colle en chauffant la surface des cinquième et sixième couches thermoplastiques et en pressant les cinquième et sixième couches thermoplastiques chauffées l'une contre l'autre sans colle pour former une troisième multicouche thermoplastique combinée exempte de colle, les cinquième et sixième couches thermoplastiques étant chacune un film sans plastifiants et comprenant au moins l'un des éléments suivants: chlorure de polyvinyle, polyéthylène téréphtalate, polyéthylène téréphtalate glycol, polypropylène et polyéthylène;
- coupler les septième et huitième couches thermoplastiques l'une à l'autre sans colle en chauffant la surface des septième et huitième couches thermoplastiques et en pressant les septième et huitième couches thermoplastiques chauffées l'une contre l'autre sans colle pour former une quatrième multicouche thermoplastique combinée exempte de colle, les septième et huitième couches thermoplastiques étant chacune un film sans plastifiants et comprenant au moins l'un des éléments suivants: chlorure de polyvinyle, polyéthylène téréphtalate, polyéthylène téréphtalate glycol, polypropylène et polyéthylène;
- coupler la deuxième multicouche thermoplastique combinée et la troisième multicouche thermoplastique combinée l'une à l'autre sans colle en chauffant la surface des surfaces de couplage des deuxième et troisième multicouches thermoplastiques combinées et en pressant les deuxième et troisième multicouches thermoplastiques combinées chauffées l'une contre l'autre sans colle pour former une cinquième multicouche thermoplastique combinée exempte de colle;
- coupler la quatrième multicouche thermoplastique combinée et la cinquième multicouche thermoplastique combinée l'une à l'autre sans colle en chauffant la surface de couplage de la quatrième et de la cinquième multicouches thermoplastiques combinées et en pressant les quatrième et cinquième multicouches thermoplastiques combinées chauffées l'une sur l'autre sans colle pour former une sixième multicouche thermoplastique combinée exempte de colle; et
- coupler la première multicouche thermoplastique combinée (11, 12) et la sixième multicouche thermoplastique combinée l'une à l'autre sans colle en chauffant la surface des premières (11, 12) et sixièmes multicouches thermoplastiques combinées et en pressant les premières (11, 12) et sixièmes multicouches thermoplastiques combinées chauffées l'une contre l'autre sans colle pour former la feuille (10) de stratifié thermoplastique (1).

11. . Procédé selon la revendication 10, dans lequel:
- une couche supérieure (11) de la première multicouche thermoplastique combinée (11, 12) est une couche superficielle transparente de 100 micromètres d'épaisseur;
- chacune des deuxième (12), troisième (13), quatrième, cinquième, sixième, septième et huitième couches thermoplastiques a une épaisseur de 350 micromètres; et
- la feuille (10) de stratifié thermoplastique (1) a une épaisseur de 2550 micromètres.

12. . Procédé selon la revendication 1, dans lequel la feuille (10) de stratifié thermoplastique (1) présente:
- des propriétés de résistance aux chocs mécaniques comprenant 152,4 cm (60 pouces) pour la résistance aux impacts de balle et 63,5 à 71,12 cm (25 à 28 pouces) pour la résistance aux impacts de fléchette;
- propriétés de planéité comprenant un résultat d'essai de planéité de +/- 3 mm pour une feuille d'une épaisseur de 0,8 mm +/- 0,05 mm;
- une stabilité dimensionnelle inférieure à 0,2% à la fois dans le sens de la machine de fabrication de feuilles et dans le sens transversal;
- une résistance de surface supérieure à 1500 cycles pour les feuilles imprimées et supérieure à environ 4000 cycles pour les feuilles de couleur uniforme; et
- un rayon post-formage à température ambiante de 8 mm.

13. . Procédé selon la revendication 1, qui comprend en outre la réalisation d'un cycle de couplage mécanique par:
- coupler la première (11) et la deuxième (12) couches thermoplastiques avec une machine ayant la première couche thermoplastique (11) sur un premier cylindre en tant que première couche et la deuxième couche thermoplastique (12) sur un deuxième cylindre en tant que deuxième couche;
- alimenter de manière tendue les première et deuxième couches sur des ensembles respectifs de premier et deuxième rouleaux peignes de la machine, au moins un rouleau de chacun des ensembles de premier et deuxième rouleaux peignes étant chauffé à une température respective de rouleau peigne par un fluide qui chauffe les première et deuxième couches respectives lorsque les première et deuxième couches sont alimentées à travers ceux-ci;
- alimenter de manière tendue les première et deuxième couches depuis les rouleaux peignes vers des rouleaux de couplage en aval des rouleaux peignes, les rouleaux de couplage pressant ensemble les première et deuxième couches avec une pression pour former la première multicouche thermoplastique combinée (11, 12), au moins l'un des rouleaux de couplage étant chauffé à une température de couplage par un fluide qui chauffe la première multicouche thermoplastique combinée (11, 12) lorsque la première multicouche thermoplastique combinée (11, 12) est acheminée à travers celui-ci;
- chauffer la première multicouche thermoplastique combinée (11, 12) adjacente aux rouleaux d'accouplement à l'aide d'un dispositif de chauffage afin de favoriser l'accouplement des première (11) et deuxième (12) couches pour former la première multicouche thermoplastique combinée (11, 12); et
- alimenter de manière tendue la première multicouche thermoplastique combinée (11, 12) depuis les rouleaux d'accouplement vers au moins un ensemble aval de rouleaux de refroidissement, au moins l'un des rouleaux de refroidissement étant refroidi à une température de refroidissement par un fluide qui refroidit la première multicouche thermoplastique combinée (11, 12) lorsque la première multicouche thermoplastique combinée (11, 12) est alimentée à travers celui-ci.

14. . Procédé selon la revendication 13, qui comprend en outre le redémarrage de la première multicouche thermoplastique combinée (11, 12) en tant que première couche (11) ou deuxième couche (12) pour un couplage combiné supplémentaire avec une autre multicouche combinée précédemment formée par un cycle de couplage machine précédent après que la première multicouche thermoplastique combinée (11, 12) a refroidi.

15. . Procédé selon la revendication 13, qui comprend en outre:
- le support de la première multicouche thermoplastique combinée (11, 12) en aval des rouleaux de refroidissement sur une surface plane et horizontale; et
- la découpe de la première multicouche thermoplastique combinée (11, 12) en feuilles plates et planes à l'aide d'un cutter disposé à proximité des rouleaux de refroidissement.
